# EUROPÄISCHE PATENTSCHRIFT

(11) **EP 1 727 628 B1**
(45) Veröffentlichungstag und Bekanntmachung des Hinweises auf die Patenterteilung: **26.05.2010**
(21) Anmeldenummer: 05716193.7
(22) Anmeldetag: 18.03.2005
(51) Int. Cl.: B08B 9/055, F16L 55/46, B65G 53/32, F16K 7/07

(54) **VORRICHTUNG UND VERFAHREN ZUR REINIGUNG EINER DICKSTOFFFÖRDERLEITUNG**
DEVICE AND METHOD FOR CLEANING A THICK MATTER DELIVERY PIPE
DISPOSITIF ET PROCEDE DE NETTOYAGE D'UNE CONDUITE DE REFOULEMENT DE PATES

(30) Priorität: 26.03.2004 DE 102004015417
(43) Veröffentlichungstag der Anmeldung: 06.12.2006
(60) Teilanmeldung: 08162193.0
(73) Patentinhaber: Putzmeister Concrete Pumps GmbH, 72631 Aichtal (DE)
(72) Erfinder: MURTHUM, Ernst, 70771 Leinfelden-Echterdingen (DE); BÜHRER, Klaus, 70794 Filderstadt (DE); WEHNER, Volker, 72108 Rottenburg (DE); SCHURAN, Max, 21220 Seevetal (DE)
(74) Vertreter: WOLF & LUTZ
(86) Internationale Anmeldenummer: PCT/EP2005/002897
(87) Internationale Veröffentlichungsnummer: WO 2005/092527

(56) Entgegenhaltungen:
- EP-A- 0 865 830
- DE-A- 2 927 324
- DE-A- 3 011 823
- DE-A- 10 144 860
- DE-A- 19 937 474
- US-B1- 6 283 680
- PATENT ABSTRACTS OF JAPAN Bd. 011, Nr. 034 (M-558), 31. Januar 1987 (1987-01-31) -& JP 61 202098 A (HITACHI LTD; others: 01), 6. September 1986 (1986-09-06)

## Beschreibung

Die Erfindung betrifft eine Vorrichtung zur Reinigung einer Dickstoffförderleitung sowie ein Verfahren zur Reinigung einer Dickstoffförderleitung.

Dickstoffe wie Beton werden an ihrem Einsatzort ausgebracht, indem sie mittels einer Dickstoffpumpe von einem Materialaufgabebehälter durch eine zum Einsatzort führende Dickstoffförderleitung gepumpt werden. Nach dem Pumpeinsatz muß die Förderleitung vom in ihr verbliebenen Restmaterial entleert und sauber gereinigt werden. Das Restmaterial kann in den Materialaufgabebehälter zurückgepumpt werden. Dies hat jedoch den Nachteil, dass der zurückgepumpte Beton nicht verwertet werden kann und entsorgt werden muß. Bei langen Dickstoffförderleitungen kann zudem der Materialaufgabebehälter überlaufen. Aus diesem Grund wird in den meisten Fällen ein Reinigungskörper, wie beispielsweise eine Schwammkugel, eingangsseitig in die Dickstoffförderleitung eingeführt. Die Schwammkugel liegt vollumfänglich an der Innenfläche der Dickstoffförderleitung an und wird durch Beaufschlagung mit Druckluft oder Wasser durch die Dickstoffförderleitung bis zum Endschlauch hindurchbefördert. Dabei schiebt sie das in der Dickstoffförderleitung verbliebene Restmaterial vor sich her und drückt es ausgangsseitig aus dem Endschlauch heraus.

Die Verwendung von Wasser als Druckmedium hat hier den Nachteil, dass Restbeton durch das Wasser verdünnt wird und nicht verwertbar ist. Die Beaufschlagung der Schwammkugel mit Druckluft erfordert aus Sicherheitsgründen an der Austrittsöffnung eine Fangeinrichtung, die verhindert, dass die Schwammkugel nach dem Austritt aus dem Endschlauch Schäden anrichten kann. Die Fangeinrichtung wird beim Pumpbetrieb entfernt und nur beim Reinigungsbetrieb montiert. Ihr An- und Abbau ist bei größerer Einsatzhäufigkeit, wie z. B. bei fahrbaren Betonpumpen, umständlich und aufwendig.

Aus der DE-A-199 37 474 ist eine Vorrichtung zur Reinigung eines Lackkanals bekannt. Durch einen Molch, der zwischen zwei Molchstationen durch den Lackkanal bewegt werden kann, kann Restlack aus dem Lackkanal entfernt und in einen Restlackbehälter abgelassen werden. Zur Steuerung des Reinigungsverfahrens wird der Durchgang des Molchs an verschiedenen Stellen durch sensoren detektiert.

Es ist daher Aufgabe der Erfindung, eine Vorrichtung und ein Verfahren der eingangs genannten Art derart weiterzubilden, dass die Reinigung der Dickstoffförderleitung weniger Aufwand erfordert.

Die Aufgabe wird erfindungsgemäß durch eine Vorrichtung mit den Merkmalen des Anspruchs 1 und ein Verfahren mit den Merkmalen des Anspruchs 8 gelöst. Der erfindungsgemaßen Lösung liegt der Gedanke zugrunde, dass der Reinigungskörper durch mindestens teilweises Verschließen des Endschlauchs bereits in diesem aufgefangen wird, wenn ein großer Teil des Restmaterials bereits aus der Dickstoffförderleitung entfernt wurde. Zu diesem Zweck detektiert der Sensor über die Ermittlung der Konsistenzanderung des in einem Abschnitt der Dickstoffförderleitung befindlichen Materials, wenn der Reinigungskörper diesen Abschnitt erreicht. Dies kann dadurch geschehen, dass der Sensor die Ankunft des Reinigungskörpers in dem Abschnitt der Förderleitung erkennt. Eine weitere, einfachere Methode besteht darin, dass der Sensor erkennt, ob sich in dem Abschnitt der Dickstoffförderteitung überwiegend Dickstoff oder überwiegend das Fluid befinden. Der Sensor erkennt dann den Durchgang des Reinigungskörpers durch den Abschnitt daran, dass sich die Konsistenz des im Abschnitt enthaltenen Materials ändert: Zunächst ist in diesem Abschnitt Dickstoff, wie Beton, enthalten, nach Durchgang des Reinigungskörpers dann das Fluid. Der Endschlauch ist ein Mantelrohr aus elastomerem Material, vorzugsweise aus Gummi, und die Verschlussöffnung weist ein Quetschventil zur Verengung der lichten Weite oder zum Verschluß des Endschlauchs auf. Wird der Endschlauch verschlossen, so wird ein Teil des Restbetons in ihm festgehalten. Besonders vorteilhaft ist, wenn lediglich die lichte Weite des Endschlauchs verengt wird, so dass der Reinigungskörper zwar hängen bleibt, aber durch eine verengte Öffnung noch einen Großteil des Restbetons aus dem Endschlauch hinausdrückt, der dann noch verwertet werden kann.

Es ist prinzipiell möglich, als Fluid Wasser zu verwenden, wobei zur Durchleitung des Wassers eine Wasserpumpe verwendet wird. Es wird jedoch bevorzugt, dass als Fluid Luft verwendet wird und dass die Einrichtung zur Einleitung des Fluids einen Kompressor zur Erzeugung von Druckluft aufweist. Dadurch wird verhindert, dass der in der Dickstoffförderleitung verbliebene Restbeton verwässert wird. Der Restbeton kann dann größtenteils verwertet werden und muß nicht teuer entsorgt werden.

Der Sensor ist vorzugsweise ein die Dickstoffförderleitung mit Ultraschall beaufschlagender Ultraschallsensor. Über das von der Innenwand der Dickstoffförderleitung reflektierte Ultraschallsignal ermittelt der kalibrierte Sensor die Konsistenz des in der Leitung befindlichen Materials. Dabei ist der Sensor zweckmäßig auf die Erkennung mindestens zweier verschiedener Materialkonsistenzen kalibriert. Diese sind beispielsweise die Materialpaare Dickstoff/Fluid, Dickstoff/Reinigungskörper oder Fluid/Reinigungskörper. Der Reinigungskörper besteht dabei zweckmäßig aus einem kompressiblen Material. Er wird zweckmäßig über einen eingangsseitig an der Dickstoffförderleitung angeordneten Schieber eingeführt.

Das Quetschventil dient zum schnellen Verschließen des Endschlauchs bei Unterbrechung des Pumpvorgangs. So wird verhindert, dass Beton unkontrolliert aus dem Endschlauch heraustritt und die Umgebung verschmutzt. Das Quetschventil zeichnet sich dadurch aus, dass es nachträglich auf eine beliebige flexible Rohrleitung, insbesondere einen Endschlauch einer Dickstoffförderleitung, aufgeschoben werden kann. Es unterliegt daher nicht dem Verschleiß durch Beaufschlagung mit in der Rohrleitung gefördertem Dickstoff. Desweiteren enthält es, mit Ausnahme des Ventils, keine starren Bestandteile, die eine Verletzungsgefahr darstellen können.

Der Schlauch ist an seiner dem Hohlraum abgewandten Außenseite zweckmäßig mit einer Textilgewebeschicht überzogen. Desweiteren ist er vorteilhafterweise in eine Manschette aus elastomerem Material eingebettet. Die Manschette schließt vorzugsweise ebenfalls die Hülle ein. Dies verleiht dem Quetschventil eine erhöhte Formstabilität. Die Manschette hat zweckmäßig die Form eines Hohlzylinders. Dabei muß der Innendurchmesser mindestens so groß sein wie der Außendurchmesser der ebenfalls zylinderförmigen Rohrleitung. Die Hülle besteht vorteilhafterweise aus einem vorzugsweise mehrlagigen Textilgewebe. In der Einlass- und Auslassöffnung ist zweckmäßig ein Ventil angeordnet, so dass der Hohlraum leicht mit Gas befüllt und wieder entleert werden kann.

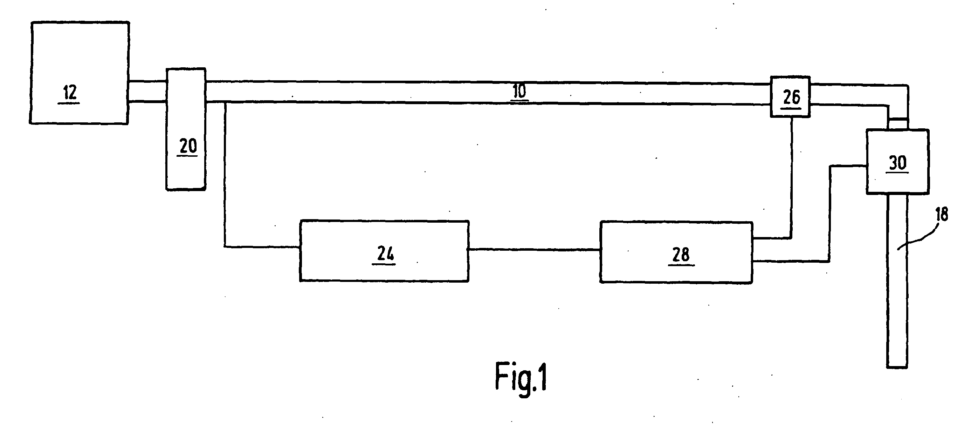

Im Folgenden wird die Erfindung anhand eines in der Zeichnung schematisch dargestellten Ausführungsbeispiels näher erläutert. Es zeigen
- Fig. 1: eine schaubildliche Darstellung einer Vorrichtung zur Reinigung einer Dickstoffförderleitung;
- Fig. 2: eine perspektivische Darstellung eines Endschlauchs der Dickstoffförderleitung mit einer Vorrichtung gemäß Fig. 1;
- Fig. 3: ein Quetschventil im Schnitt.

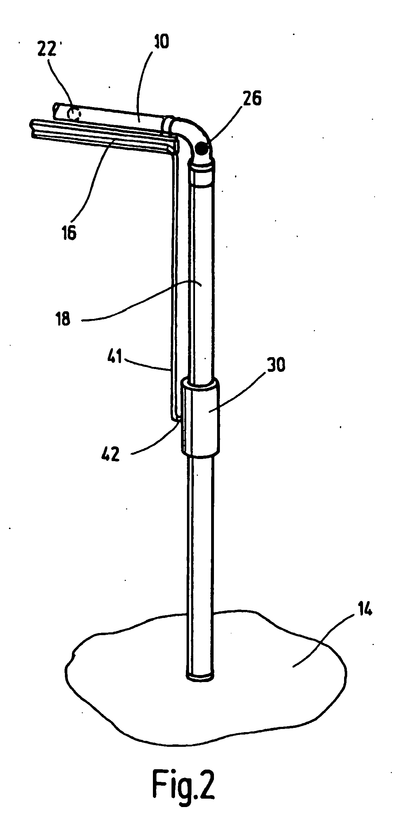

Eine Dickstoffförderleitung 10 ist dazu bestimmt, Dickstoff, wie Beton, von einem Materialaufgabebehälter 12 zu einer Ausbringstelle 14 zu leiten. Sie ist an einem Mast montiert, dessen endseitiger Mastarm 16 in Fig. 2 dargestellt ist, und trägt an ihrem austrittsseitigen Ende einen Endschlauch 18 aus Gummi. Zur Reinigung nach dem Pumpbetrieb wird eintrittsseitig über einen Schieber 20 ein Reinigungskörper 22 in Form einer kompressiblen, vollumfänglich an die Innenwand der Dickstoffförderleitung 10 anliegenden Schwammkugel eingebracht. Der Schieber 20 sperrt gleichzeitig die Dickstoffförderleitung 10 zum Materialaufgabebehälter 12 ab. Mittels eines Kompressors 24 wird Druckluft in die Dickstoffförderleitung eingeleitet, die die Schwammkugel 22 durch die Dickstoffförderleitung 10 in Richtung Endschlauch 18 drückt. In der Dickstoffförderleitung 10 verbliebener Restbeton wird dabei durch die Schwammkugel 22 über den Endschlauch 18 entfernt. In einem Abschnitt der Dickstoffförderleitung 10 ist nahe dem Endschlauch 18 ein Ultraschallsensor 26 angeordnet, der die Innenwand der Dickstoffförderleitung 10 mit Ultraschall beaufschlagt. Der von der Innenwand reflektierte und vom Sensor 26 gemessene Ultraschall erfährt eine Änderung, wenn sich die Konsistenz des in dem den Sensor tragenden Abschnitt der Dickstoffförderleitung 10 befindlichen Materials ändert. Dies ist dann der Fall, wenn die Schwammkugel 22 den Sensor 26 passiert. Die Schwammkugel 22 schiebt vor sich eine Säule von Restbeton, hinter der Schwammkugel 22 befindet sich überwiegend Druckluft. Die vom Sensor 26 gemessene Konsistenzänderung von Beton auf Luft wird vom Sensor erkannt, der ein Signal an eine Steuerungseinheit 28 übermittelt.

Der Endschlauch 18 trägt ein Quetschventil 30, das bei Betätigung seinen Innenquerschnitt verengt oder verschließt. Das Quetschventil 30 wird durch die Steuerungseinheit 28 betätigt, wenn diese das die Konsistenzänderung charakterisierende Signal vom Sensor 26 erhält. Die Schwammkugel 22 bleibt an der verengten Stelle des Endschlauchs 18 hängen, während der vor der Schwammkugel 22 her geschobene Restbeton diese Stelle noch passieren kann und verwertet werden kann. Gleichzeitig mit der Betätigung des Quetschventils 30 schaltet die Steuerungseinheit 28 den Kompressor 24 ab. Zur Entfernung der Schwammkugel 22 aus dem Endschlauch 18 wird das Quetschventil 30 entspannt und die Dickstoffförderleitung 10 nochmals mit Druckluft beaufschlagt.

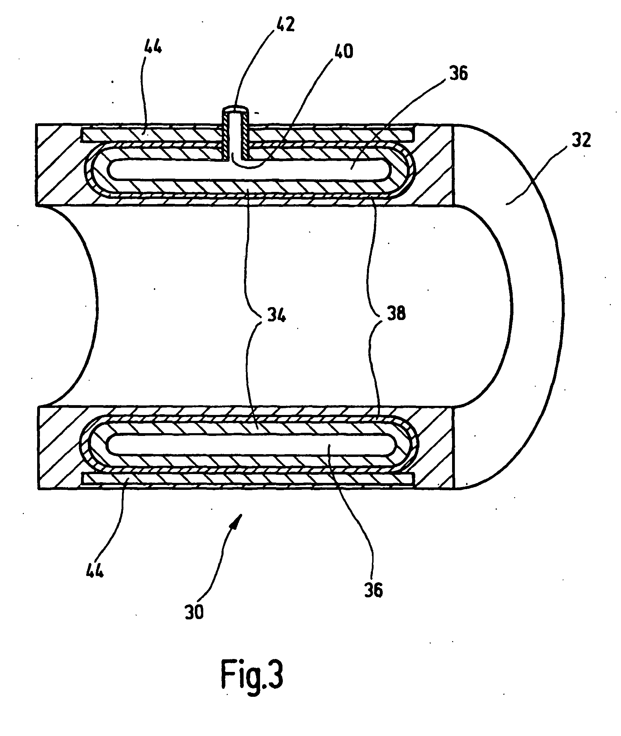

Das Questschventil (Fig. 3) weist eine Manschette 32 aus einem elastomeren Material auf. Die Manschette 32 ist zylinderförmig und hat einen Innendurchmesser, der etwas größer ist als der Außendurchmesser des Endschlauchs 18, so dass das Quetschventil 30 auf diesen aufgeschoben werden kann. In die Manschette 32 ist ein Schlauch 34 aus einem Elastomerwerkstoff eingebettet, der einen ringförmigen Hohlraum 36 begrenzt. Der Schlauch 34 ist an seiner Außenseite mit einer Textilgewebeschicht 38 überzogen. Er weist zudem eine Öffnung 40 auf, über die er über eine Leitung 41 (Fig. 2) mit Gas, insbesondere Druckluft, befüllbar ist. In der Einlass- und Auslassöffnung 40 ist ein Ventil 42 angeordnet. In die Manschette 32 ist eine ringförmige Hülle 44 eingebettet, in deren Innerem der Schlauch 34 aufgenommen ist. Die Hülle 44 besteht aus mehreren Lagen eines Textilgewebes und ist dadurch schlechter verformbar als die Textilgewebeschicht 38. Bei Betätigung des Quetschventils wird über das Ventil 42 Druckluft in den Hohlraum 36 eingeleitet, so dass der Schlauch 34 gedehnt wird. Die Hülle 44 schränkt die Ausdehnung des Schlauchs 34 in radialer Richtung nach außen ein, so dass das Befüllen des Hohlraums 36 mit Druckluft eine Verringerung des Innendurchmessers der Manschette 32 bewirkt. Diese Verengung überträgt sich auf den durch die Manschette 32 verlaufenden flexiblen Endschlauch 18, so dass durch Betätigung des Quetschventils 30 seine lichte Weite verringert bzw. der Endschlauch 18 verschlossen werden kann.

Zusammenfassend ist folgendes festzuhalten: Die Erfindung betrifft eine Vorrichtung zur Reinigung einer Dickstoffförderleitung 10 mit einem austrittsseitig angebrachten Endschlauch 18, welche eine Einrichtung 24 zur Einleitung eines unter Druck stehenden Fluids in die Dickstoffförderleitung 10 und einen Reinigungskörper 22 aufweist, der mittels Fluidbeaufschlagung an der Innenfläche der Dickstoffförderleitung 10 vollumfänglich anliegend durch diese hindurchbeförderbar ist. Erfindungsgemäß weist die Vorrichtung einen Sensor 26 zur Ermittlung der Konsistenz des in einem Abschnitt der Dickstoffförderleitung 10 befindlichen Materials, eine Steuerungseinheit 28, an die bei einer Änderung der Konsistenz des Materials vom Sensor 26 ein Signal übertragbar ist, und eine bei Erhalt des Signals durch die Steuerungseinheit betätigbare Verschlusseinrichtung 30 zum mindestens teilweisen Verschließen des Endschlauchs 18 auf.

## Patentansprüche

1. Vorrichtung zur Reinigung einer Dickstoffförderleitung (10) mit einem austrittsseitig angebrachten, ein Mantelrohr aus elastomerem Material, vorzugsweise aus Gummi, aufweisenden Endschlauch (18), mit einem vollumfänglich an der Innenfläche der Dickstoffförderleitung (10) anliegenden Reinigungskörper (22), mit einer Einrichtung (24) zur Einleitung eines unter Druck stehenden Fluids in die Dickstoffförderleitung (10) zur Beaufschlagung des Reinigungskörpers (22) und zur Beförderung des Reinigungskörpers (22) durch die Dickstoffförderleitung (10), mit einer Verschlusseinrichtung (30) zum mindestens teilweisen Verschließen des Endschlauchs (18) und mit einem Sensor (26) zur Ermittlung der Konsistenz des in einem Abschnitt der Dickstoffförderleitung (10) befindlichen Materials und zur Übermittlung eines eine Konsistenzänderung charakterisierenden Signals an eine Steuerungseinheit (28) zur Betätigung der Verschlusseinrichtung (30), wobei die Verschlusseinrichtung (30) ein Quetschventil zur Verengung der lichten Weite oder zum Verschluß des Endschlauchs (18) aufweist.

2. Vorrichtung nach Anspruch 1, **dadurch gekennzeichnet, dass** das Fluid Luft ist und dass die Einrichtung (24) zur Einleitung des Fluids einen Kompressor zur Erzeugung von Druckluft aufweist

3. Vorrichtung nach Anspruch 1, **dadurch gekennzeichnet, dass** das Fluid Wasser ist und dass die Einrichtung (24) zur Einleitung des Fluids eine Wasserpumpe aufweist.

4. Vorrichtung nach einem der vorangehenden Ansprüche, **gekennzeichnet durch** einen eingangsseitig an der Dickstoffförderleitung (10) angeordneten Schieber (20) zum Einführen des Reinigungskörpers (22).

5. Vorrichtung nach einem der vorangehenden Ansprüche, **dadurch gekennzeichnet, dass** der Sensor (26) auf die Erkennung mindestens zweier verschiedener Materialkonsistenzen kalibriert ist.

6. Vorrichtung nach einem der vorangehenden Ansprüche, **dadurch gekennzeichnet, dass** der Sensor (26) ein die Dickstoffförderleitung (10) mit Ultraschall beaufschlagender Ultraschallsensor ist.

7. Vorrichtung nach einem der vorangehenden Ansprüche, **dadurch gekennzeichnet, dass** der Reinigungskörper (22) aus einem kompressiblen Material besteht

8. Verfahren zum Reinigen einer Dickstoffförderleitung (10) mit austrittsseitig angebrachtem Endschlauch (18), der ein Mantelrohr aus elastomerem Material, vorzugsweise aus Gummi, aufweist, bei dem ein unter Druck stehendes Fluid in die Dickstoffförderleitung (10) eingeleitet wird und bei dem ein Reinigungskörper (22) mittels Beaufschlagung durch das Fluid an der Innenfläche der Dickstoffförderleitung (10) vollumfänglich anliegend durch diese hindurch befördert wird, wobei mittels eines Sensors (26) die Konsistenz des in einem Abschnitt der Dickstoffförderleitung (10) befindlichen Materials ermittelt wird, wobei der Sensor (26) bei einer Änderung der Konsistenz des Materials ein Signal an eine Steuerungseinheit (28) überträgt, und wobei die Steuerungseinheit (28) bei Erhalt des Signals ein Quetschventil (30) betätigt, durch dessen Betätigung die lichte Weite des Endschlauchs (18) verengt oder der Endschlauch (18) verschlossen wird.

9. Verfahren nach Anspruch 8, **dadurch gekennzeichnet, dass** das Fluid Druckluft ist, die mittels eines Kompressors in die Dickstoffförderleitung (10) eingeleitet wird.

10. Verfahren nach Anspruch 8, **dadurch gekennzeichnet, dass** das Fluid Wasser ist, das mittels einer Wasserpumpe in die Dickstoffförderleitung-(10) eingeleitet wird.

11. Verfahren nach einem der Ansprüche 8 bis 10, **dadurch gekennzeichnet, dass** der Reinigungskörper (22) mittels eines eingangsseitig an der Dickstoflörderleitung (10) angeordneten Schiebers (20) in diese eingeführt wird.

12. Verfahren nach einem der Ansprüche 8 bis 11, **dadurch gekennzeichnet, dass** der Sensor (26) mindestens zwei verschiedene vorgegebene Materialkonsistenzen erkennt.

13. Verfahren nach einem der Ansprüche 8 bis 12, **dadurch gekennzeichnet, dass** der Sensor (26) die Dickstoffförderleitung (10) mit Ultraschall beaufschlagt und durch Auswertung des reflektierten Ultraschalls die Materialkonsistenz bestimmt.

## Claims

1. Device for cleaning a thick matter delivery pipe (10) with an end hose (18) which is mounted on the outlet side and has a casing tube made of elastomer material, preferably rubber, with a cleaning body (22) having its full circumference in contact with the inner surface of the thick matter delivery pipe (10), with a device (24) for introducing a fluid under pressure into the thick matter delivery pipe (10) for imposing on the cleaning body (22) and for conveying the cleaning body (22) through the thick matter delivery pipe (10), with a closure device (30) for the at least partial closure of the end hose (18) and with a sensor (26) for determining the consistency of the material located in a section of the thick matter delivery pipe (10) and for transmitting a signal characterising a change in consistency to a control unit (28) for actuating the closure device (30), wherein the closure device (30) has a pinch valve for constricting the clear width or for closing off the end hose (18).

2. Device according to Claim 1, **characterised in that** the fluid is air and that the device (24) for introducing the fluid has a compressor for generating compressed air.

3. Device according to Claim 1, **characterised in that** the fluid is water, and **in that** the device (24) for introducing the fluid has a water pump.

4. Device according to any one of the preceding claims, **characterised by** a slide valve (20), arranged on the input side of the thick matter delivery pipe (10), for introducing the cleaning body (22).

5. Device according to any one of the preceding claims, **characterised in that** the sensor (26) is calibrated such as to identify at least two different material consistencies.

6. Device according to any one of the preceding claims, **characterised in that** the sensor (26) is an ultrasonic sensor exposing the thick matter delivery pipe (10) to ultrasound.

7. Device according to any one of the preceding claims, **characterised in that** the cleaning body (22) consists of a compressible material.

8. Method for cleaning a thick matter delivery pipe (10) with an end hose (18) which is mounted on the outlet side and has a casing tube made of elastomer material, preferably rubber, with which a fluid under pressure is introduced into the thick matter delivery pipe (10), and with which a cleaning body (22), having its full circumference in contact with the inner surface of the thick matter delivery pipe (10), is conveyed through this delivery pipe by means of imposition by the fluid, wherein, by means of a sensor (26), the consistency of the material located in a section of the thick matter delivery pipe (10) is determined, wherein the sensor (26) issues a signal to a control unit (28) in the event of a change in the consistency of the material, and wherein the control unit (28), upon receiving the signal, actuates a pinch valve (30), by the actuation of which the clear width of the end hose (18) is constricted or the end hose (18) is closed off.

9. Method according to Claim 8, **characterised in that** the fluid is compressed air, which is introduced into the thick matter delivery pipe (10) by means of a compressor.

10. Method according to Claim 8, **characterised in that** the fluid is water, which is introduced into the thick matter delivery pipe (10) by means of a water pump.

11. Method according to any one of Claims 8 to 10, **characterised in that** the cleaning body (22) is introduced into the thick matter delivery pipe (10) by means of a slide valve (20) arranged on the input side thereof.

12. Method according to any one of Claims 8 to 11, **characterised in that** the sensor (26) identifies at least two different specified material consistencies.

13. Method according to any one of Claims 8 to 12, **characterised in that** the sensor (26) exposes the thick matter delivery pipe (10) to ultrasound, and determines the material consistency by evaluating the reflected ultrasound.

## Revendications

1. Dispositif de nettoyage d'une conduite (10) de refoulement de matière épaisse dotée d'un flexible terminal (18) monté du côté de sortie (5) et présentant un tube d'enveloppe en matériau élastomère, de préférence en caoutchouc, avec un corps de nettoyage (22) s'appliquant sur toute sa circonférence contre la surface intérieure de la conduite (10) de refoulement de matière épaisse, avec un organe (24) pour introduire un fluide sous pression dans la conduite (10) de refoulement de matière épaisse afin de solliciter le corps de nettoyage (22) et de déplacer le corps de nettoyage (22) à travers la conduite (10) de refoulement de matière épaisse, avec un organe de fermeture (30) pour fermer au moins partiellement le flexible terminal (18), et avec un détecteur (26) pour déterminer la consistance de la matière qui se trouve dans un tronçon de la conduite (10) de refoulement de matière épaisse et pour transmettre un signal, caractérisant une modification de consistance, à une unité de commande (28) pour actionner l'organe de fermeture (30), sachant que l'organe de fermeture (30) présente un robinet-vanne à manchon déformable pour réduire le diamètre de passage du flexible terminal (18) ou pour le fermer.

2. Dispositif selon la revendication 1, **caractérisé en ce que** le fluide est de l'air, et **en ce que** l'organe (24) pour introduire le fluide présente un compresseur pour produire de l'air comprimé.

3. Dispositif selon la revendication 1, **caractérisé en ce que** le fluide est de l'eau, et **en ce que** l'organe (24) pour introduire le fluide présente une pompe à eau.

4. Dispositif selon l'une des revendications précédentes, **caractérisé par** un tiroir (20) disposé du côté d'entrée sur la conduite (10) de refoulement de matière épaisse pour introduire le corps de nettoyage (22).

5. Dispositif selon l'une des revendications précédentes, **caractérisé en ce que** le détecteur (26) est calibré pour identifier au moins deux consistances de matière différentes.

6. Dispositif selon l'une des revendications précédentes, **caractérisé en ce que** le détecteur (26) est un détecteur à ultrasons, sollicitant par des ultrasons la conduite (10) de refoulement de matière épaisse.

7. Dispositif selon l'une des revendications précédentes, **caractérisé en ce que** le corps de nettoyage (22) est constitué d'un matériau compressible.

8. Procédé de nettoyage d'une conduite (10) de refoulement de matière épaisse dotée d'un flexible terminal (18) monté du côté de sortie et présentant un tube d'enveloppe en matériau élastomère, de préférence en caoutchouc, selon lequel un fluide sous pression est introduit dans la conduite (10) de refoulement de matière épaisse, et selon lequel un corps de nettoyage (22) est, en étant sollicité par le fluide, transporté à travers la conduite (10) de refoulement de matière épaisse en s'appliquant sur toute sa circonférence contre la surface intérieure de celle-ci, sachant qu'au moyen d'un détecteur (26), on détermine la consistance de la matière qui se trouve dans un tronçon de la conduite (10) de refoulement de matière épaisse, sachant que le détecteur (26) transmet un signal à une unité de commande (28) lors d'une modification de la consistance de la matière, et sachant que l'unité de commande (28), lorsqu'elle reçoit le signal, actionne un robinet-vanne (30) à manchon déformable dont l'actionnement réduit le diamètre de passage du flexible terminal (18) ou ferme le flexible terminal (18).

9. Procédé selon la revendication 8, **caractérisé en ce que** le fluide est de l'air comprimé, qui est introduit dans la conduite (10) de refoulement de matière épaisse au moyen d'un compresseur.

10. Procédé selon la revendication 8, **caractérisé en ce que** le fluide est de l'eau, qui est introduit dans la conduite (10) de refoulement de matière épaisse au moyen d'une pompe à eau.

11. Procédé selon l'une des revendications 8 à 10, **caractérisé en ce que** le corps de nettoyage (22) est introduit dans la conduite (10) de refoulement de matière épaisse au moyen d'un tiroir (20) disposé du côté d'entrée sur celle-ci.

12. Procédé selon l'une des revendications 8 à 11, **caractérisé en ce que** le détecteur (26) identifie au moins deux consistances de matière différentes prédéfinies.

13. Procédé selon l'une des revendications 8 à 12, **caractérisé en ce que** le détecteur (26) sollicite par des ultrasons la conduite (10) de refoulement de matière épaisse et détermine la consistance de la matière en interprétant les ultrasons réfléchis.
